(19) Europäisches Patentamt
European Patent Office
Office européen des brevets

(11) **EP 1 809 897 B1**

(12) **FASCICULE DE BREVET EUROPEEN**

(45) Date de publication et mention de la délivrance du brevet:
**25.04.2012 Bulletin 2012/17**

(21) Numéro de dépôt: **05797034.5**

(22) Date de dépôt: **13.10.2005**

(51) Int Cl.:
***F03B 13/20*** (2006.01)

(86) Numéro de dépôt international:
**PCT/EP2005/055234**

(87) Numéro de publication internationale:
**WO 2006/040341 (20.04.2006 Gazette 2006/16)**

(54) **APPAREIL POUR CONVERTIR L'ENERGIE DES VAGUES EN ENERGIE ELECTRIQUE**

VORRICHTUNG ZUR UMWANDLUNG VON WELLENENERGIE IN ELEKTRISCHEN STROM

APPARATUS FOR CONVERTING WAVE ENERGY INTO ELECTRIC POWER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.10.2004 FR 0410927**

(43) Date de publication de la demande:
**25.07.2007 Bulletin 2007/30**

(73) Titulaire: **CENTRE NATIONAL DE LA RECHERCHE SCIENTIFIQUE (CNRS) Etablissement Public 75016 Paris (FR)**

(72) Inventeurs:
• **CLEMENT, Alain**
  **F-44300 NANTES (FR)**
• **BABARIT, Aurélien**
  **F-44000 NANTES (FR)**
• **DUCLOS, Gaëlle**
  **F-44700 ORVAULT (FR)**

(74) Mandataire: **Callon de Lamarck, Jean-Robert et al Cabinet Regimbeau 20 rue de Chazelles 75847 Paris cedex 17 (FR)**

(56) Documents cités:
**FR-A- 2 568 947        GB-A- 905 446
GB-A- 2 094 408        US-A- 4 423 334
US-A- 4 599 858**

• **BABARIT,A;DUCLOS,G.;CLÉMENT,A.H.: "Benefit of Latching Control for a Heaving Wave Energy Device in Random Sea" PROCS. 13TH (2003) INTERNATIONAL OFFSHORE AND POLAR ENG. CONF., 25 mai 2003 (2003-05-25), pages 341-348, XP002365332 Honolulu,Hawaii,USA**

**Description**

L'invention concerne le domaine des appareils pour convertir l'énergie des vagues en énergie électrique.

Ces appareils, dits appareils « houlomoteurs », sont particulièrement intéressants car ils permettent de produire de l'électricité à partir d'une source d'énergie renouvelable (l'énergie potentielle et cinétique des vagues) sans émission de gaz à effet de serre.

L'intérêt de l'énergie houlomotrice est encore plus important dans le cadre de la fourniture d'électricité à des sites insulaires isolés.

Le document FR 547 765 (publié le 28 juillet 1924) décrit un dispositif de captation de l'énergie produite par le flot marin. Le dispositif comprend un corps flottant dans lequel est disposé une masse M montée mobile par rapport au corps flottant. Le dispositif inclut également un dispositif de récupération d'énergie sous la forme de pistons hydrauliques actionnés par le mouvement de la masse.

Un tel dispositif nécessite des moyens de freinage pneumatiques permettant de limiter la course de la masse lorsque le flotteur est sollicité vers des positions approchant des inclinaisons limites. Ces moyens de freinage évitent une détérioration (voire une destruction) du dispositif en cas de forte mer.

Le document WO 02/23039 (publié le 21 mars 2002) décrit un dispositif de conversion de l'énergie des vagues. Le dispositif comprend une palette apte à être mise en mouvement par l'action des vagues et une masse apte à coulisser par rapport à la palette.

Ce système nécessite d'être ajusté pour que sa fréquence naturelle corresponde à la fréquence moyenne de résonance des vagues.

Le document FR 80 00785 (publié le 8 août 1980) décrit un appareil pour convertir l'énergie des vagues dans l'eau comprenant deux éléments destinés à être immergés dans l'eau, et des moyens de liaison entre les deux éléments. Les deux éléments sont aptes à osciller l'un par rapport à l'autre sous l'effet des vagues. Le mouvement relatif des deux éléments est utilisé pour produire de l'énergie électrique. L'appareil comprend en outre un dispositif de verrouillage mutuel des éléments l'un par rapport à l'autre. Le dispositif de verrouillage permet de verrouiller les deux éléments l'un par rapport à l'autre pendant des périodes de temps choisies du cycle de chaque vague.

Le document US 4 599 858 (publié le 15 juillet 1986) décrit également un appareil comprenant une plateforme fixe et un flotteur apte à être mis en mouvement vertical par rapport à la plateforme sous l'effet de la houle. L'appareil comprend en outre un dispositif de verrouillage sous la forme de disques de frein pour bloquer et libérer le flotteur.

L'utilisation judicieuse du dispositif de verrouillage doit permettre d'augmenter l'énergie produite par l'appareil.

Un tel appareil est toutefois sensible à l'agression des éléments extérieurs. En effet, les pièces constitutives de l'appareil, et notamment les moyens de liaison comprenant des articulations, se trouvent en contact direct avec l'eau.

L'intérêt du contrôle par bloqué-lâché (latching) a par ailleurs été étudié de manière théorique dans les publications suivantes :

« Contrôle discret par latching d'un système houlomoteur à un degré de liberté », A. BABARIT, G. DUCLOS, A. H. CLEMENT, acte des 9ièmes Journées de l'Hydrodynamique, Poitiers, mars 2003, pp. 251-264.
« Comparison of latching control stratégies for a heaving wave energy device in random sea », A. BABARIT, G. DUCLOS, A. H. CLEMENT, proceedings of 5th European Wave Energy Conférence, Cork, 2003.
« Benefit of latching control for heaving wave energy device in random sea », A. BABARIT, G. DUCLOS, A. H. CLEMENT, proceedings of 13th International Offshore and Polar Engineering Conference, ISOPE 2003, Honolulu, Vol.1, pp. 341-348.

Ces études montrent que le contrôle par bloqué-lâché permet théoriquement de multiplier considérablement la puissance moyenne.

Le document GB 2 094 408 (publié le 15 septembre 1982) décrit un appareil destiné à être embarqué sur une structure flottante, telle qu'un bateau, comprenant une base destinée à être fixée au bateau et un poids monté mobile en rotation par rapport à la base. Le poids est mis en mouvement sous l'action des vagues sur la structure flottante.

Un problème résolu par l'invention est de fournir un appareil pour convertir l'énergie des vagues dans l'eau en énergie électrique qui soit à la fois robuste et qui présente un rendement amélioré.

A cet effet, l'invention propose un appareil pour convertir l'énergie des vagues en énergie électrique, comprenant un élément flotteur fermé et un élément formant masse, l'élément formant masse étant disposé à l'intérieur de l'élément flotteur et étant monté mobile par rapport à l'élément flotteur, l'élément formant masse étant apte à être mis en mouvement relatif par rapport à l'élément flotteur sous l'action des vagues sur l'élément flotteur, caractérisé en ce qu'il comprend également des moyens de blocage aptes à bloquer le mouvement de l'élément formant masse et des moyens de commande aptes à commander les moyens de blocage pour sélectivement bloquer ou libérer l'élément formant masse par adaptation continuelle de la dynamique de l'appareil aux vagues successives.

L'élément flotteur étant à coque fermée, les éléments travaillant à l'intérieur se trouvent à l'abri des agressions extérieures, et notamment de l'action de l'eau. Seul l'extérieur de l'élément flotteur (la carène) se trouve en contact avec l'eau. L'élément formant masse est donc mis en mouvement de manière indirecte, par le mouvement de l'élément flotteur.

Les moyens de blocage et les moyens de commande permettent de sélectivement bloquer ou libérer l'élément formant masse de manière à amplifier le mouvement de l'élément formant masse producteur d'énergie. L'amplification du mouvement de l'élément formant masse est obtenue par l'immobilisation de cet élément formant masse dans des périodes non favorables de son cycle d'oscillation et sa libération lorsque les conditions initiales pour son mouvement ultérieur sont plus favorables et permettent d'amplifier celui-ci.

Cette caractéristique permet d'augmenter le rendement énergétique de l'appareil.

L'appareil proposé ne nécessite pas de référence externe fixe, contrairement à certains appareils de l'art antérieur qui nécessitent l'installation d'un ancrage tendu ou de superstructures fixées au fond de la mer. L'ancrage de l'appareil, qui peu s'apparenter à l'amarrage d'un bateau au mouillage, est particulièrement simple et peu coûteux.

En outre, l'appareil de l'invention ne nécessite pas de superstructure émergente, de sorte qu'il présente un impact visuel réduit.

L'appareil de l'invention pourra avantageusement présenter les caractéristiques suivantes :

- les moyens de commande sont aptes à commander les moyens de blocage pour qu'ils bloquent l'élément formant masse lorsque celui-ci atteint une vitesse relative sensiblement nulle par rapport à l'élément flotteur,
- les moyens de commande sont aptes à commander les moyens de blocage pour qu'ils bloquent l'élément formant masse pendant une durée de blocage calculée en fonction du mouvement de l'élément flotteur,
- l'élément formant masse est libre de tourner autour d'un axe de rotation, le mouvement de l'élément formant masse ne se trouvant pas limité par une fin de course,
- l'élément formant masse présente une forme de révolution ayant un axe de révolution et l'élément formant masse peut tourner sur lui-même par rapport à l'élément flotteur autour de l'axe de révolution,
- l'élément formant masse présente une forme générale cylindrique et peut tourner sur lui-même par rapport à l'élément flotteur autour de l'axe du cylindre,
- l'élément formant masse présente un centre de gravité excentré par rapport à l'axe de révolution,
- l'appareil comprend un dispositif de récupération d'énergie incluant au moins un galet rotatif en contact avec l'élément formant masse,
- le dispositif de récupération d'énergie comprend un générateur relié au galet rotatif,
- l'appareil comprend un dispositif de récupération d'énergie incluant une pluralité d'enroulements et une pluralité d'aimants disposés sur l'élément formant masse et sur l'élément flotteur de sorte que lorsque l'élément formant masse est entraîné en rotation par rapport à l'élément flotteur, du courant électrique est généré dans les enroulements,
- l'élément flotteur comprend une partie supérieure surmontant une partie inférieure, la partie inférieure contenant l'élément formant masse,
- la partie inférieure présente une forme générale cylindrique plane,
- la partie supérieure présente une forme évasée qui s'élargit vers le haut,
- la partie supérieure présente une forme évasée qui s'élargit vers le haut en dessous de la flottaison et une forme profilée sans superstructure au dessus de la flottaison pour minimiser l'action destructrice des vagues déferlantes dans les états de mer extrêmes,
- l'élément flotteur est profilé de sorte que lorsque l'appareil est immergé dans l'eau et amarré sur une seule ligne, il s'oriente naturellement par rapport à la direction principale de propagation des vagues afin d'obtenir une sollicitation maximale de l'élément formant masse,
- un élément formant masse monté rotatif selon un axe de rotation par rapport à l'élément flotteur, l'appareil s'orientant naturellement de manière à ce que l'axe de rotation soit sensiblement perpendiculaire à la direction principale de propagation des vagues,
- l'appareil comprend plusieurs éléments formant masse, montés mobiles par rapport à l'élément flotteur, chaque élément formant masse étant apte à être mis en mouvement par rapport à l'élément flotteur sous l'action des vagues sur l'élément flotteur et des moyens de blocage associés à chaque élément formant masse, les moyens de commande étant aptes à commander les moyens de blocage pour sélectivement bloquer ou libérer chacun des éléments formant masse.

Par ailleurs, l'invention concerne également un procédé pour convertir l'énergie des vagues en énergie électrique à partir d'un appareil comprenant un élément flotteur fermé et un élément formant masse, l'élément formant masse étant disposé à l'intérieur de l'élément flotteur et étant monté mobile par rapport à l'élément flotteur, l'élément formant masse étant apte à être mis en mouvement par rapport à l'élément flotteur sous l'action des vagues sur l'élément flotteur, caractérisé en ce qu'il comprend les étapes consistant à commander des moyens de blocage aptes à bloquer le mouvement de l'élément formant masse par des moyens de commande pour sélectivement bloquer ou libérer l'élément formant masse de manière à amplifier le mouvement de l'élément formant masse par adaptation continuelle de la dynamique de l'appareil aux vagues successives.

Le procédé de l'invention pourra avantageusement présenter les étapes selon lesquelles

- des moyens de mesure transmettent de manière régulière à des moyens de traitement des données incluant des valeurs de paramètres relatifs aux mouvements de l'élément flotteur et de l'élément formant masse,
- les moyens de traitement déterminent des valeurs de la fréquence dominante d'excitation des vagues à un instant ultérieur, en fonction des valeurs de paramètres mesurées,
- les moyens de commande commandent les moyens de blocage pour qu'ils bloquent l'élément formant masse au moment ou l'élément formant masse atteint une vitesse relative nulle par rapport à l'élément flotteur,
- les moyens de traitement déterminent un délai optimal de blocage de l'élément formant masse, en fonction des valeurs de la fréquence dominante d'excitation des vagues,
- les moyens de commande commandent les moyens de blocage pour débloquer l'élément formant masse lorsque le compteur de temps a atteint le délai optimal.

Dans une mise en oeuvre de ce procédé, pour déterminer le délai optimal de blocage de l'élément formant masse, les moyens de traitement interrogent une table pré-établie contenant des valeurs de délai de blocage en fonction de la valeur de la fréquence d'excitation des vagues à un instant ultérieur.

Par ailleurs, les valeurs de délai de blocage pourront avoir été déterminées pour une houle régulière et pour l'appareil en question.

D'autres caractéristiques et avantages ressortiront encore de la description qui suit, laquelle est purement illustrative et non limitative et doit être lue en regard des dessins annexés parmi lesquels :

- la figure 1 est un schéma de principe d'un appareil pour convertir l'énergie des vagues conforme à un premier mode de réalisation possible de l'invention,
- la figure 2 est un schéma de principe d'une variante de l'appareil de la figure 1,
- la figure 3 est un schéma de principe d'un appareil de récupération pour convertir l'énergie des vagues conforme à un deuxième mode de réalisation possible de l'invention,
- la figure 4 est un schéma de principe d'une variante de l'appareil de la figure 3,
- la figure 5A représente de manière schématique en vue de face un exemple de mode de réalisation du mécanisme interne de l'appareil de la figure 3,
- la figure 5B représente de manière schématique en vue de côté le mécanisme de la figure 5A,
- la figure 6 est un diagramme illustrant l'oscillation de l'élément formant masse dans un appareil pour convertir l'énergie des vagues, lorsque l'élément formant masse est laissé libre ou lorsqu'il est contrôlé par les moyens de blocage, en houle régulière,
- la figure 7 est un diagramme illustrant l'amplitude des oscillations de l'élément flotteur et de l'élément formant masse lorsque l'élément formant masse est laissé libre ou lorsqu'il est contrôlé par les moyens de blocage, en houle irrégulière,
- la figure 8 est un diagramme illustrant l'amplification de l'amplitude des oscillations de l'élément formant masse par rapport à l'élément flotteur dans l'appareil pour convertir l'énergie des vagues des figures 3 à 5, en houle régulière, en fonction de la fréquence de la houle, lorsque l'élément formant masse est laissé libre ou lorsqu'il est contrôlé par les moyens de blocage,
- la figure 9 est un diagramme illustrant la puissance absorbée par l'appareil pour convertir l'énergie des vagues des figures 3 à 5, exprimée en largeur de capture, en houle régulière, en fonction de la fréquence de la houle, lorsque l'élément formant masse est laissé libre ou lorsqu'il est contrôlé par les moyens de blocage,
- les figures 10 à 12 représentent de manière schématique un élément flotteur destiné à être utilisé dans le deuxième mode de réalisation de l'appareil pour convertir l'énergie des vagues conforme à l'invention,
- la figure 13 représente de manière schématique le mécanisme interne d'un appareil pour convertir l'énergie des vagues conforme à un quatrième mode de réalisation possible de l'invention, dans lequel l'élément formant masse est suspendu par une liaison rotule au flotteur,
- la figure 14 représente de manière schématique un premier dispositif de récupération d'énergie dans l'appareil de la figure 13,
- la figure 15 représente de manière schématique le mécanisme interne d'un appareil pour convertir l'énergie des vagues conforme à cinquième mode de réalisation possible de l'invention, dans lequel l'élément formant masse est suspendu par une liaison cardan au flotteur
- les figures 16 et 17 représente de manière schématique des moyens de récupération d'énergie dans l'appareil de la figure 15,
- la figure 18 représente de manière schématique des moyens de blocage dans l'appareil de la figure 15,

EP 1 809 897 B1

- la figure 19 est un diagramme représentant les différentes étapes du procédé de commande des moyens de blocage dans un appareil pour convertir l'énergie des vagues conforme à l'invention.

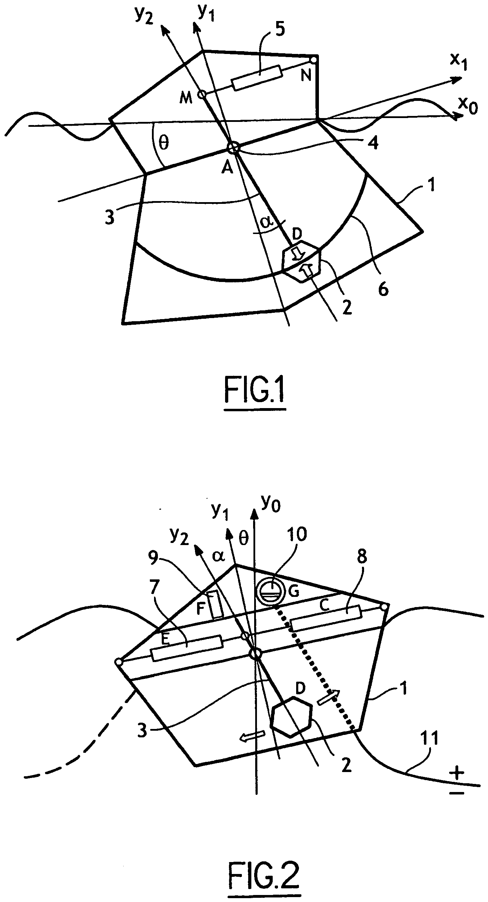

Selon un premier mode de réalisation représenté sur la figure 1, l'appareil pour convertir l'énergie des vagues en énergie électrique comprend un élément flotteur 1 fermé destiné à être immergé dans l'eau et un élément formant masse 2 disposé à l'intérieur de l'élément flotteur 1. L'appareil comprend également une tige 3 à une extrémité D de laquelle est attaché l'élément formant masse 2. La tige 2 est montée à rotation par rapport à l'élément flotteur 1 autour d'un axe de rotation 4.

L'appareil de la figure 1 comprend également un dispositif de récupération d'énergie 5 (Power Take Off) fixé d'une part à l'extrémité M de la tige 3 opposée à l'extrémité D à laquelle est attaché l'élément formant masse 2 et d'autre part à un point fixe N de l'élément flotteur 1.

L'appareil de la figure 1 comprend également un rail de guidage 6 le long duquel l'élément formant masse 2 peut coulisser. Enfin, l'appareil comprend des moyens de blocage aptes à bloquer le mouvement de l'élément formant masse le long du rail 6 (les moyens de blocage étant symbolisés par une double flèche), ainsi que des moyens de commande (non représentés) aptes à commander les moyens de blocage pour sélectivement bloquer ou libérer l'élément formant masse 2.

En fonctionnement, l'élément formant masse 2 est apte à être mis en mouvement par rapport à l'élément flotteur 1 sous l'action des vagues sur l'élément flotteur 1. Les vagues mettent l'élément flotteur 1 en mouvement (mouvements de translation selon l'axe horizontal x, selon l'axe vertical y et mouvement de tangage d'angle $\theta$), ce qui entraîne la mise en mouvement de l'élément formant masse 2 (rotation d'angle $\alpha$ autour de l'axe 4) par rapport à l'élément flotteur 1. L'élément formant masse 2 se déplace le long du rail 6 et oscille au gré des sollicitations des vagues sur l'élément flotteur 1. Au cours de son déplacement, l'élément formant masse 2 entraîne en rotation la tige 3 qui actionne le dispositif de récupération d'énergie 5.

Selon une variante du premier mode de réalisation représentée sur la figure 2, le dispositif de récupération d'énergie est de type à génération indirecte. Le dispositif de récupération de l'énergie comprend des moyens de pompage 7 et 8 d'un fluide (eau, huile ou air), qui lorsqu'ils sont actionnés par le mouvement de rotation de la tige 3 entraînent la mise sous pression du fluide stocké dans un accumulateur 9. Le fluide sous pression stocké dans l'accumulateur 9 est ensuite utilisé pour faire tourner un générateur électrique 10. L'énergie électrique fournie par le générateur électrique est transmise vers la terre au moyen d'un câble 11 sous marin relié à l'élément flotteur 2.

Les moyens de commande sont aptes à commander les moyens de blocage pour qu'ils bloquent l'élément formant masse 2 lorsque celui-ci atteint une vitesse nulle ($\dot{\alpha} = 0$) par rapport à l'élément flotteur 1. Plus précisément, les moyens de commande sont aptes à commander les moyens de blocage pour qu'ils bloquent l'élément formant masse 2 pendant une durée de blocage prédéterminée, ladite durée de blocage prédéterminée étant calculée en temps réel en fonction du mouvement de l'élément flotteur 1.

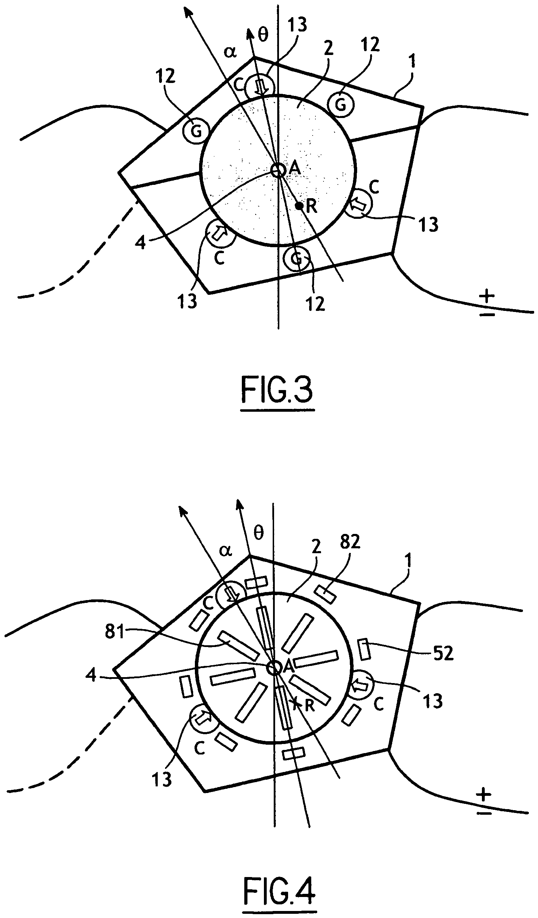

La figure 3 représente de manière schématique un deuxième mode de réalisation particulièrement avantageux d'un appareil conforme à l'invention. Dans ce mode de réalisation, le mouvement de rotation de l'élément formant masse 2 ne présente aucune limitation.

Comme illustré sur la figure 3, l'élément formant masse 2 présente une forme de révolution ayant un axe de révolution 4. Plus particulièrement, l'élément formant masse 2 présente une forme générale cylindrique. L'élément formant masse 2 peut tourner sur lui-même par rapport à l'élément flotteur 1 autour de l'axe de révolution 4 qui est l'axe propre du cylindre. L'élément formant masse présente un centre de gravité R excentré par rapport à son axe de révolution 4.

L'appareil représenté sur la figure 3 comprend un dispositif de récupération d'énergie incluant une pluralité de galets rotatifs 12 en contact avec l'élément formant masse 2. Le mouvement de rotation de l'élément formant masse 2 entraîne la rotation des galets 12. Les galets actionnent un générateur électrique relié aux galets rotatifs. L'appareil représenté sur la figure 3 comprend également des moyens de blocage 13 répartis autour de l'élément formant masse 2.

Dans l'appareil représenté sur la figure 3, la rotation de l'élément formant masse 2 ne se trouve limitée ni par l'espace intérieur de l'élément flotteur 1, ni par le dispositif de récupération d'énergie. Ainsi, un tel appareil ne nécessite pas de dispositifs de fin de course. En cas de forte houle, l'élément formant masse 2 peut effectuer un tour complet sur lui-même sans endommager la structure de l'appareil. C'est pourquoi, l'appareil conforme à ce troisième mode de réalisation est particulièrement robuste en comparaison des appareils de l'art antérieur.

Par ailleurs, la disposition d'un élément formant masse présentant un grand diamètre par rapport au diamètre des galets conduit à une démultiplication importante de la vitesse de rotation de l'élément formant masse par les galets. Cette disposition permet d'obtenir un bon rendement du dispositif de récupération d'énergie.

En outre, la disposition des moyens de blocage à la périphérie de l'élément formant masse 2 permet une démultiplication du couple de blocage généré et ainsi une bonne efficacité du blocage. Cette disposition minimise donc le dimensionnement des moyens de blocage.

La figure 4 représente de manière schématique une variante de l'appareil de la figure 3, dans laquelle le dispositif de récupération d'énergie est de type à génération électrique directe.

Le dispositif de récupération d'énergie comprend une pluralité d'aimants 81 disposés sur l'élément formant masse 2 et positionnés en étoile autour de l'axe de révolution 4. Le dispositif de récupération d'énergie comprend par ailleurs une pluralité d'enroulements 82 disposés autour de l'élément formant masse 2 de manière fixe par rapport à l'élément flotteur 1.

Dans cette variante, l'élément flotteur 1 et l'élément formant masse 2 sont assimilables à un stator et un rotor d'un générateur électrique. Lorsque l'élément formant masse 2 est entraîné en rotation par rapport à l'élément flotteur 1, les enroulements 82 soumis à un champ magnétique variable développent un champ électrique à leurs extrémités et du courant électrique est généré dans les enroulements 82.

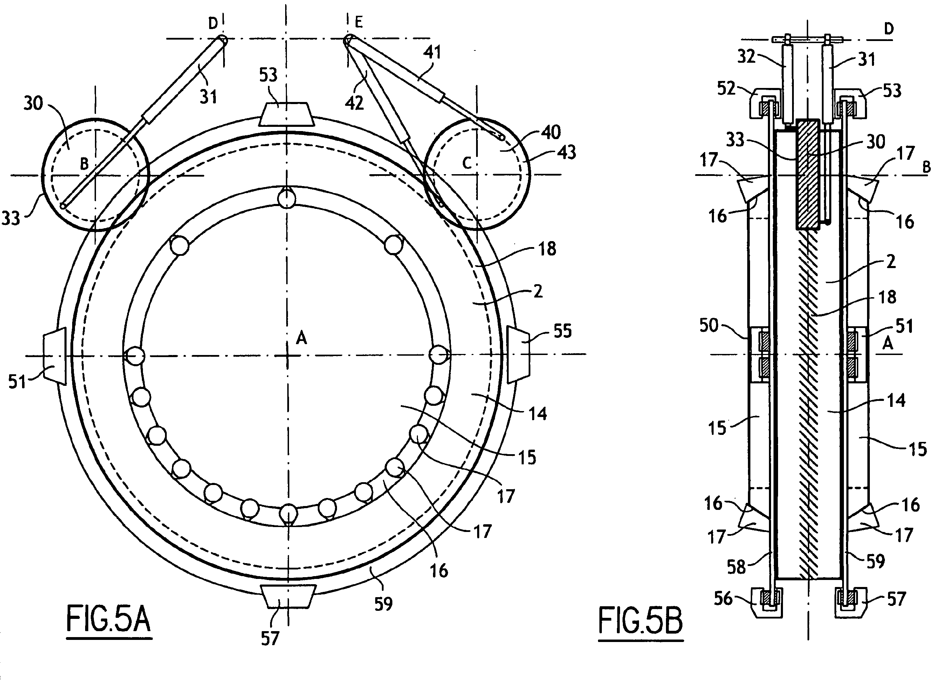

Les figures 5A et 5B représentent de manière schématique respectivement en vue de face et en vue de côté un exemple de mode de réalisation du mécanisme interne de l'appareil de la figure 3.

Dans ce mode de réalisation, le mécanisme comprend un élément formant masse 2 présentant une forme de révolution d'axe A, l'élément formant masse 2 comprenant une partie de forme générale cylindrique 14 et deux flasques latéraux 15 agencés de part et d'autre de la partie cylindrique 14 sur deux faces planes de la partie cylindrique 14. Chaque flasque 15 présente une forme générale conique et comprend une surface d'appui 16 inclinée rapport à la face latérale de la partie cylindrique 14 sur laquelle est agencé le flasque 15.

Le mécanisme comprend également des rouleaux coniques 16 disposés autour de chacun des flasques 15 en contact avec les surfaces d'appui 16, de sorte que l'élément formant masse 2 repose en appui sur les rouleaux 17 par l'intermédiaire des surfaces d'appui 16. Les rouleaux 17 ont pour fonction de supporter l'élément formant masse 2 et de guider l'élément formant masse 2 dans son mouvement de rotation autour de l'axe A.

Par ailleurs, l'élément formant masse 2 est muni sur le pourtour de la partie cylindrique 14 d'une denture d'engrenage 18.

Le mécanisme comprend également un dispositif de récupération d'énergie. Le dispositif de récupération d'énergie comprend deux pignons 30 et 40 de forme générale cylindriques. Les pignons 30 et 40 sont montés rotatifs autour d'axes respectif B et C. Chaque pignon 30 et 40 est muni sur son pourtour d'une denture d'engrenage 33 et 43. Les pignons 30 et 40 sont disposés par rapport à l'élément formant masse 2 de sorte que la denture 33 et 43 de chacun des pignons 30 et 40 coopère avec la denture 18 de l'élément formant masse 2 et que chaque pignon 30, 40 engrène avec l'élément formant masse 2.

Le dispositif de récupération d'énergie comprend également des vérins hydrauliques 31, 32, 41, 42. Chaque pignon 30, 40 est associé à une paire de vérins hydrauliques (31, 32) et (41, 42). Les vérins hydrauliques (31, 32), (41, 42) d'une même paire s'étendent de part et d'autre du pignon 30, 40 associé. Les vérins hydrauliques (31, 32), (41, 42) d'une même paire présentent une extrémité liée à un même axe D, E de rotation et l'autre extrémité liée à un même pignon 30, 40 en un point excentré par rapport à l'axe de rotation B, C du pignon. Un mouvement de rotation continue d'un pignon 30, 40 entraîne un mouvement rectiligne alternatif des vérins 31, 32, 41, 42 qui lui sont liés.

On remarquera que les vérins d'une même paire (31, 32) et (41, 42) sont liés au pignon 30, 40 correspondant en deux points diamétralement opposés du pignon. Ainsi, lorsque l'un des vérins d'une paire se trouve dans une position extrême de sa course (par exemple dans une position de compression maximale), l'autre vérin de la paire est dans une position extrême opposée (position d'extension maximale).

On remarquera également que les pignons 30, 40 et les vérins 31, 32, 41, 42 sont agencés de sorte que lorsque les vérins d'une même paire (par exemple, les vérins 31 et 32 associés au pignon 30) se trouvent dans des positions de course extrêmes, les vérins de l'autre paire (les vérins 41 et 42 associés au pignon 40) se trouvent dans des positions intermédiaires. Plus précisément, les vérins de l'autre paire (les vérins 41 et 42) se trouvent dans une position d'égale extension.

En fonctionnement, l'élément formant masse 2 est entraîné en rotation alternée autour de l'axe A par rapport à l'élément flotteur sous l'action des vagues sur l'élément flotteur. La rotation de l'élément formant masse 2 entraîne la rotation des pignons 30 et 40. La rotation des pignons 30 et 40 entraîne l'oscillation des vérins 31, 32, 41, 42. Du fait de l'agencement particulier des pignons 30, 40 et des vérins 31, 32, 41, 42, les vérins 31, 32, 41, 42 oscillent de manière déphasée les uns par rapport aux autres.

Les vérins 31, 32, 41, 42 actionnent un dispositif de récupération d'énergie apte à convertir leur mouvement de translation en énergie électrique.

Par ailleurs, le mécanisme représenté sur les figures 5A et 5B comprend des moyens de blocage. Les moyens de blocage incluent deux disques de frein 58 et 59, chaque disque de frein 58, 59 présentant une forme générale plane circulaire. Les disques de frein 58, 59 sont fixés de part et d'autre de la partie cylindrique 14 de l'élément formant masse 2, sur chacune des faces de la partie cylindrique 14. Les moyens de blocage comprennent en outre des étriers 50, 52, 54, 56 et 51, 53, 55, 57 munis de plaquettes et répartis respectivement autour des disques de frein 58 et 59. Les étriers 50, 52, 54, 56 et 51, 53, 55, 57 sont aptes à être commandés par des moyens de commande pour venir en appui sur le disque de frein 58, 59 pour immobiliser l'élément formant masse 2 en position.

ETABLISSEMENT D'UNE TABLE DES DELAIS DE BLOCAGE

Nous allons maintenant décrire une méthode permettant d'établir une table des valeurs de délai optimal $\hat{\theta}$ de blocage pour un appareil pour convertir l'énergie des vagues. Cette table est établie pour une excitation de l'appareil par une houle régulière. Cette table pré-établie est utilisée par les moyens de commande dans le procédé de commande des moyens de blocage.

Quand l'appareil houlomoteur est en fonctionnement sur les vagues, le mouvement de rotation d'angle $\alpha\square$ de l'élément formant masse par rapport à l'élément flotteur est un mouvement oscillatoire (mouvement de va-et-vient) présentant un point mort pour lequel la vitesse de rotation $\ddot{\alpha}$ s'annule à la fin de chaque alternance.

Le principe de commande proposé pour augmenter le mouvement relatif de rotation d'angle $\alpha$ de l'élément formant masse mobile par rapport à l'élément flotteur (et par voie de conséquence l'énergie produite) est le suivant : on attend que le mouvement de la masse mobile arrive à vitesse nulle (point mort) et on bloque ce mouvement à cet instant. On laisse passer un certain délai $\delta$ et on relâche l'élément formant masse mobile qui peut alors repartir pour sa prochaine oscillation. On doit donc déterminer en temps réel pour chaque alternance de mouvement le délai optimal de blocage $\hat{\delta}$.

Des moyens de mesure embarqués mesurent en permanence six paramètres élémentaires de mouvements de l'élément flotteur suivants :

- un paramètre de cavalement (translation avant - arrière),
- un paramètre d'embardée (translation bâbord - tribord),
- un paramètre de pilonnement (translation verticale haut - bas),
- un paramètre de roulis (rotation autour de l'axe de cavalement),
- un paramètre de tangage (rotation autour de l'axe d'embardée),
- un paramètre de lacet (rotation autour de l'axe de lacet),

Les moyens de mesure mesurent également l'angle relatif $\alpha$ de l'élément formant masse mobile par rapport à l'élément flotteur.

On considère le cas d'une houle régulière, sinusoïdale et de faible amplitude, de pulsation $\omega$ (donc de fréquence $\omega/2\pi$ et de période $2\pi/\omega$ ), excitant l'appareil depuis un temps suffisamment long pour qu'un régime permanent périodique se soit établi. Dans ce cas, le délai de blocage optimal $\hat{\delta}$ est une fonction de la seule pulsation w de la houle incidente.

On note :

- $d$ la distance entre l'axe de rotation de l'élément formant masse et le centre de gravité de l'élément flotteur,
- $l$ la distance entre l'axe de rotation de l'élément formant masse mobile et son propre centre de gravité,
- $m_b$ la masse de l'élément flotteur,
- $I_b$ le moment d'inertie de l'élément flotteur en rotation autour de son centre de gravité,
- $z_G$ la coordonnée verticale du centre de gravité de l'élément flotteur,
- $x_G$ la coordonnée horizontale du centre de gravité de l'élément flotteur,
- $\theta$ l'angle de rotation de l'élément flotteur par rapport à la direction verticale,
- $\alpha$ l'angle de rotation de l'élément formant masse par rapport à l'axe de symétrie verticale de l'élément flotteur,
- $m_p$ la masse de l'élément formant masse,
- $I_y$ le moment d'inertie de l'élément formant masse par rapport à son centre de gravité R,
- $K_{PTO}$ la raideur linéarisée du dispositif de récupération d'énergie (vérins hydrauliques),
- $k_x$ la raideur horizontale équivalente de l'amarrage de l'appareil,
- $B_{PTO}$ l'amortissement linéarisé du dispositif de récupération d'énergie.

On pose :

$$\mathbf{X} = \left(x_G, z_G, \theta, \alpha\right)^{\curlyvee} \tag{1}$$

Après avoir linéarisé les équations de la mécanique en faisant l'hypothèse que les déplacements autour de la position d'équilibre statique sont petits, on peut mettre l'équation du mouvement de l'ensemble sous la forme de l'équation différentielle matricielle suivante :

$$\left(\mathbf{M} + \mathbf{\mu}_\infty\right)\ddot{\mathbf{X}} = \mathbf{F}_{ex} - \mathbf{I} - \left(\mathbf{K}_h + \mathbf{K}_a + \mathbf{K}_p\right)\mathbf{X} - \mathbf{P}\dot{\mathbf{X}} \qquad\qquad [2]$$

Avec:

$\mathbf{F}_{ex}$ la force d'excitation généralisée due à l'action de la houle sur l'élément flotteur lorsque l'élément flotteur est immobile qui vaut :

$$\mathbf{F}_{ex} = \sum_{i=1}^{N} a_i \Im\left(\begin{pmatrix} F_{I+D,1}(\omega_i) \\ F_{I+D,3}(\omega_i) \\ F_{I+D,5}(\omega_i) \\ 0 \end{pmatrix} e^{i(\omega_i t + \varphi_0)}\right) \qquad\qquad [3]$$

$M$ la matrice masse généralisée qui vaut :

$$\mathbf{M} = \begin{pmatrix} m_b + m_p & 0 & m_p(d-l) & m_p l \\ 0 & m_b + m_p & 0 & 0 \\ m_p(d-l) & 0 & I_b + I_y + m_p(d-l)^2 & I_y + m_p l^2 - m_p dl \\ -m_p l & 0 & I_y + m_p l^2 - m_p dl & I_y + m_p l^2 \end{pmatrix} \qquad [4]$$

$\mathbf{K}_h + \mathbf{K}_a$ la matrice des raideurs hydrostatiques et d'amarrage qui vaut :

$$\left(\mathbf{K}_h + \mathbf{K}_a\right) = \begin{pmatrix} K_{H,11} + k_x & K_{H,13} & K_{H,15} & 0 \\ K_{H,13} & K_{H,33} & K_{H,35} & 0 \\ K_{H,15} & K_{H,35} & K_{H,55} & 0 \\ 0 & 0 & 0 & 0 \end{pmatrix} \qquad\qquad [5]$$

$\mathbf{K}p$ la raideur du rappel exercé par l'élément formant masse sur l'élément flotteur qui vaut :

$$\mathbf{K}_p = \begin{pmatrix} 0 & 0 & 0 & 0 \\ 0 & 0 & 0 & 0 \\ 0 & 0 & -m_g(d-l) & m_p gl \\ 0 & 0 & m_p gl & m_p gl + K_{PTO} \end{pmatrix} \qquad\qquad [6]$$

$\mathbf{P}$ l'amortissement linéarisé associé au dispositif de récupération d'énergie produisant l'électricité qui vaut :

$$\mathbf{P} = \begin{pmatrix} 0 & 0 & 0 & 0 \\ 0 & 0 & 0 & 0 \\ 0 & 0 & 0 & 0 \\ 0 & 0 & 0 & B_{PTO} \end{pmatrix} \qquad\qquad [7]$$

La matrice $\mu_\infty$ et le vecteur I représentent les efforts hydrodynamiques dus aux mouvements de l'élément flotteur dans l'eau. Ils sont obtenus sous cette forme différentielle à partir de leur formulation par intégrale de convolution (dite de Cummin's) en appliquant une identification par somme d'exponentielles aux noyaux de ces intégrales. Leur formulation intégrale peut être obtenue en utilisant des logiciels de calcul hydrodynamique travaillant dans le domaine fréquentiel (donnant masse ajoutée et amortissements hydrodynamiques), ou dans le domaine temporel (donnant directement les réponses impulsionnelles qui figurent dans ces intégrales.

On pourra a cet égard se referrer à la publication suivante:

« Using differential properties of the Green function in seakeeping computational codes », A. H. CLEMENT, Proceedings of 7th International conference Numer. Ship Hydrod, Nantes, (1999), pp.6.5-1 - 6.5-15).

La méthode d'identification par somme d'exponentielles par l'algorithme de Prony est décrite quant à elle dans l'annexe de la publication suivante :

« Absorption of outgoing waves in a numerical wave tank using a self-adaptive boundary condition », G. DUCLOS, A. H. CLÉMENT, G. CHATRY, Int. Journal of Offshore and Polar Engineering (2001), Vol.11, n°3, pp.168-175, ISSN 1053-5381.

On a ainsi accès, après ces calculs préliminaires, à :

$$\boldsymbol{\mu_\infty} = \begin{pmatrix} \mu_{\infty,11} & \mu_{\infty,13} & \mu_{\infty,15} & 0 \\ \mu_{\infty,13} & \mu_{\infty,33} & \mu_{\infty,35} & 0 \\ \mu_{\infty,15} & \mu_{\infty,35} & \mu_{\infty,55} & 0 \\ 0 & 0 & 0 & 0 \end{pmatrix} \qquad [7]$$

et :

$$\mathbf{I}(t) = \sum_{j=\{1,3,5\}} \begin{pmatrix} \sum_{r=1}^{N_{i,j}} I_{1jr} \\ \sum_{r=1}^{N_{i,j}} I_{3jr} \\ \sum_{r=1}^{N_{i,j}} I_{5jr} \\ 0 \end{pmatrix} \qquad [8]$$

Pour se ramener à une équation d'état sous sa forme classique on peut écrire l'équation [2] sous la forme plus compacte d'une équation différentielle matricielle du premier ordre à coefficients réels en multipliant les termes par $(M + \mu_\infty)^{-1}$. On obtient alors :

$$\dot{\mathbf{X}} = \mathbf{AX} + \Re\left(\mathbf{B}e^{i(\omega t + \varphi_0)}\right) \qquad [9]$$

où X est maintenant le vecteur d'état étendu :

$$\mathbf{X} = \begin{pmatrix} x_G & \dot{x}_G & z_G & \dot{z}_G & \theta & \dot{\theta} & \alpha & \dot{\alpha} & I_1^R & I_1^I & ... & I_N^R & I_N^I \end{pmatrix}^t \qquad [10]$$

$I^R$ et $I^I$ désignant les parties réelles et imaginaires des états complexes $I_j$.

La relation [9] régit le fonctionnement de l'ensemble (élément flotteur + élément formant masse) excité par une houle régulière de pulsation $\omega$, se propageant dans l'axe du système, dans les phases où l'élément formant masse n'est pas bloqué.

Pendant les phases de blocage, la relation [9] est légèrement différente et simplifiée. Les seules équations correspondant au mouvement relatif $\alpha$ de l'élément formant masse (mouvement productif d'énergie) se simplifient de la manière suivante :

$$\begin{cases} \dot{\alpha} = 0 \\ \alpha = \alpha(0) \end{cases} \qquad [11]$$

où $t = 0$ représente l'instant du blocage.

En reportant les coefficients correspondants dans la relation [9], on obtient une autre équation différentielle qui, elle, sera valable pendant les périodes de blocage de l'élément formant masse mobile :

$$\dot{\mathbf{X}} = \mathbf{A}\mathbf{X}' + \Re\left( \mathbf{B}' e^{i(\omega t + \varphi_0)} \right) \qquad [12]$$

D'une façon générale, si l'on dispose d'une condition initiale $\mathbf{X}_i = \mathbf{X}(t = t_i)$, la solution de l'équation [9] après cet instant s'écrit :

$$\mathbf{X}(t) = \exp(\mathbf{A}(t - t_i)) \cdot \mathbf{X}_i + \Re\left( \left( \mathbf{I} \cdot e^{i\omega(t - t_i)} - \exp(\mathbf{A}(t - t_i)) \right) \cdot (i\omega\mathbf{I} - \mathbf{A})^{-1} \cdot \mathbf{B} \cdot e^{i(\omega t_i + \varphi_0)} \right)$$
$$[13]$$

Pour déterminer le délai optimal de blocage dans ces conditions de régime périodique établi en houle régulière, on procède alors de la façon suivante.

Le régime que l'on recherche est une alternance de modes bloqué et de modes libre pour l'élément formant masse. On fixe l'origine des temps $t = 0$ au moment ou l'élément formant masse arrête son mouvement relatif ($\dot{\alpha} = 0$) et est bloqué au point mort (avant ou arrière) de sa course. On relâche l'élément formant masse lorsque $t = t_0$. L'élément formant masse (re)commence donc à tourner par rapport à l'élément flotteur jusqu'au moment $t_1$ où, de nouveau la vitesse relative s'annule ($\dot{\alpha} = 0$) quand l'élément formant masse arrive au point mort opposé. $t_1$ représente donc la demi-période du mouvement de l'élément formant masse. La période $2t_1$ de l'élément formant masse devant être égale ou multiple de la période de la houle incidente pour que le régime global soit périodique établi. On a donc :

$$t_1 = \left( k + \frac{1}{2} \right) \frac{2\pi}{\omega} \qquad [14]$$

avec $k = 0,1,2,....$

On pose:

- $\Delta = t_1 - t_0$
- $\mathbf{X}_0 = \mathbf{X}(t_0)$
- $\mathbf{X}_1 = \mathbf{X}(t_1)$

A $t = t_0$, on a d'après [12] et [13] :

$$\mathbf{X}_0 = \exp(\mathbf{A}'t_0) \cdot \mathbf{X}_i + \Re\left(\left(\mathbf{I} \cdot e^{i\omega t0} - \exp(\mathbf{A}'t_0)\right) \cdot \left(i\omega\mathbf{I} - \mathbf{A}'\right)^{-1} \cdot \mathbf{B}' \cdot e^{i\varphi 0}\right) \qquad [15]$$

et à $t = t_1$, on doit avoir $\mathbf{X}_1 = -\mathbf{X}(0)$ à cause de la périodicité. D'où :

$$\mathbf{X}(0) = -\left(\mathbf{I} + \exp(\mathbf{A}\Delta) \cdot \exp(\mathbf{A}'t_0)\right)^{-1} \times$$

$$\Re\left[\begin{pmatrix} \exp(\mathbf{A}\Delta) \cdot \left(\mathbf{I} - \exp(\mathbf{A}'t_0) \cdot e^{-i\omega t0}\right) \cdot \left(i\omega\mathbf{I} - \mathbf{A}'\right)^{-1} \cdot \mathbf{B}' \\ + \left(\mathbf{I} \cdot e^{i\omega\Delta} - \exp(\mathbf{A}\Delta)\right) \cdot \left(i\omega\mathbf{I} - \mathbf{A}\right)^{-1} \cdot \mathbf{B} \end{pmatrix} \cdot e^{i(\omega t0 + \varphi 0)}\right] \qquad [16]$$

Comme $\dot{\alpha}$ est, ici, la huitième composante de $X$ (voir équation [10]) et qu'à t = 0, par définition, la vitesse $\dot{\alpha}$ s'annule (instant de blocage), l'annulation de la huitième ligne de l'équation [16] fournit l'équation qui permet de déterminer le $t_0$ optimal et donc le délai optimal $\hat{\delta}$ recherché ($\hat{\delta} = t_0$).

L'algorithme de recherche de $\delta$ pour une valeur donnée de $\omega$ se déroule alors selon les étapes suivantes :

Selon une première étape, on établit tous les termes de l'équation [16] à partir des paramètres donnés (forme de l'élément flotteur, masses, inerties, position de l'élément formant masse, etc).

Selon une deuxième étape, on fixe $k = 0,1,2,...$

Selon une troisième étape, on fixe $\varphi_0 \in [0, \pi]$, la phase de la force d'excitation $F_{ex}$.

Selon une quatrième étape, on recherche alors la valeur de $t_0$ satisfaisant l'équation [16].

Selon une cinquième étape, on calcule la puissance récupérée sur un cycle de fonctionnement pour ce couple solution $(\varphi_0, t_0)$.

Selon une sixième étape, on renouvelle les troisième, quatrième et cinquième étapes pour balayer l'intervalle $\varphi_0 \in [0, \pi]$ pour la phase de la force d'excitation $F_{ex}$.

Selon une septième étape, on renouvelle les deuxième, troisième, quatrième et cinquième étapes en incrémentant $k$ (éventuellement si $\omega > \omega_1$ fréquence propre de tangage de l'élément flotteur.

Selon une huitième étape, on détermine le couple $(\hat{\varphi}_0(\omega), \hat{t}_0(\omega))$ qui maximise l'énergie produite sur un cycle, et pour la valeur de $\omega$ correspondante, on mémorise $\delta(\omega) = \hat{t}_0(\omega)$ dans une table des délais de blocage.

Les simulations numériques montrent que le système, excité par une houle régulière ($\omega$) et muni des moyens de commande par bloqué/lâché avec la valeur $\hat{\delta}$ ainsi déterminée évolue de lui même vers un régime établi avec la phase $\hat{\varphi}_0$, quelle que soit la condition initiale $\varphi_0$ à l'instant du lâcher.

## ALGORITHME DE COMMANDE PAR BLOQUE-LACHE

Nous allons maintenant décrire les différentes étapes du procédé de commande des moyens de blocage dans l'appareil pour convertir l'énergie des vagues.

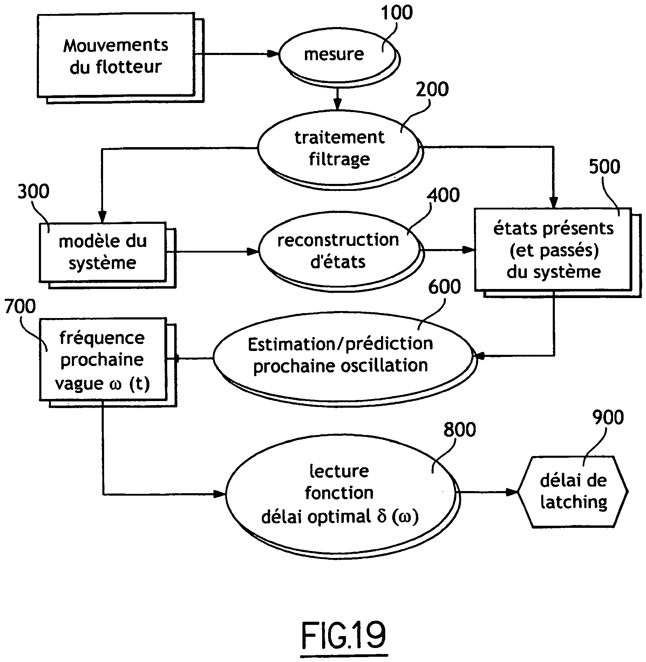

Comme illustré sur la figure 19, les moyens de commande comprennent des moyens de traitement aptes à exécuter des étapes de détermination de la durée de blocage des moyens de blocage.

Selon une première étape 100, des moyens de mesure transmettent de manière régulière aux moyens de traitement des données incluant des valeurs de paramètres relatifs aux six mouvements élémentaires de l'élément flotteur ainsi qu'à l'angle relatif $\alpha$ de l'élément formant masse.

Selon une deuxième étape 200, les moyens de traitement filtrent éventuellement les données pour éliminer les parasites et bruits qu'elles contiennent.

Selon une troisième étape 300, les moyens de traitement déterminent des valeurs de paramètres supplémentaires incluant les dérivées temporelles des six paramètres de mouvement, les composantes des efforts hydrodynamiques de radiation dus aux mouvements du flotteur dans l'eau, les composantes des efforts hydrodynamiques d'excitation dus aux vagues.

Ces valeurs de paramètres supplémentaires sont déterminées à partir des valeurs de paramètres relatifs aux six mouvements élémentaires de l'élément flotteur grâce à un modèle dynamique de l'appareil pour convertir l'énergie des vagues.

Selon une quatrième étape 400, les moyens de traitement déterminent un état présent de l'aappareil incluant l'ensemble des paramètre déterminés aux étapes 100 et 300 ainsi que des états passés de l'appareil.

Selon une cinquième étape 500, les moyens de traitement déterminent des valeurs de la force d'excitation des vagues à un instant ultérieur. Autrement dit, les moyens de traitement prédisent des valeurs de la force d'excitation des vagues en des instants futurs de manière à détecter la fréquence de la prochaine vague qui viendra toucher l'appareil.

Une telle prédiction peut être réalisée en utilisant par exemple un algorithme de type « filtrage de Kalman étendu ». Un tel algorithme est par exemple décrit dans la publication :

« Self adaptative control of a piston wave-absorber », G. CHATRY, A. H. CLEMENT, T. GOURAUD, proceedings of 8th International Offshore and Polar Engineering Conference, ISOPE 1998, Montreal, Vol. 1, pp.127-133.

Une telle estimation est réalisée en permanence, indépendamment de l'état bloqué ou non de l'élément formant masse.

Selon une sixième étape 600, les moyens de commande commandent les moyens de blocage pour qu'ils bloquent l'élément formant masse au moment ou l'élément formant masse atteint une vitesse relative nulle par rapport à l'élément flotteur, c'est-à-dire lorsque $\dot{\alpha}$ = 0. Simultanément, les moyens de commande déclenchent un compteur de temps qui mesure la durée d'immobilisation de l'élément formant masse par rapport à l'élément flotteur.

Selon une septième 700, les moyens de traitement enregistrent la valeur de la fréquence d'excitation des vagues déterminées à l'étape 500.

Selon une huitième étape 800, les moyens de traitement déterminent le délai optimal $\hat{\theta}$ de blocage de l'élément formant masse. A cet effet, les moyens de traitement interrogent une table pré-établie contenant des valeurs de délai de blocage $\hat{\theta}$ en fonction de la valeur de la fréquence d'excitation des prochaines vagues enregistrée à l'étape 700.

La table contient des valeurs pré-établies de $\hat{\theta}$ auxquelles sont associées des valeurs de la fréquence d'excitation des vagues. Ces valeurs de $\hat{\theta}$ ont été déterminées pour une houle régulière et pour l'appareil considéré.

Selon une neuvième étape 900, les moyens de commande commandent les moyens de blocage pour débloquer l'élément formant masse lorsque le compteur de temps a atteint le délai optimal $\hat{\theta}$.

Les étapes 100 à 800 sont ensuite répétées, pour sélectivement bloquer ou libérer l'élément formant masse de manière à amplifier le mouvement de l'élément formant masse par adaptation continuelle de la dynamique de l'appareil aux vagues successives.

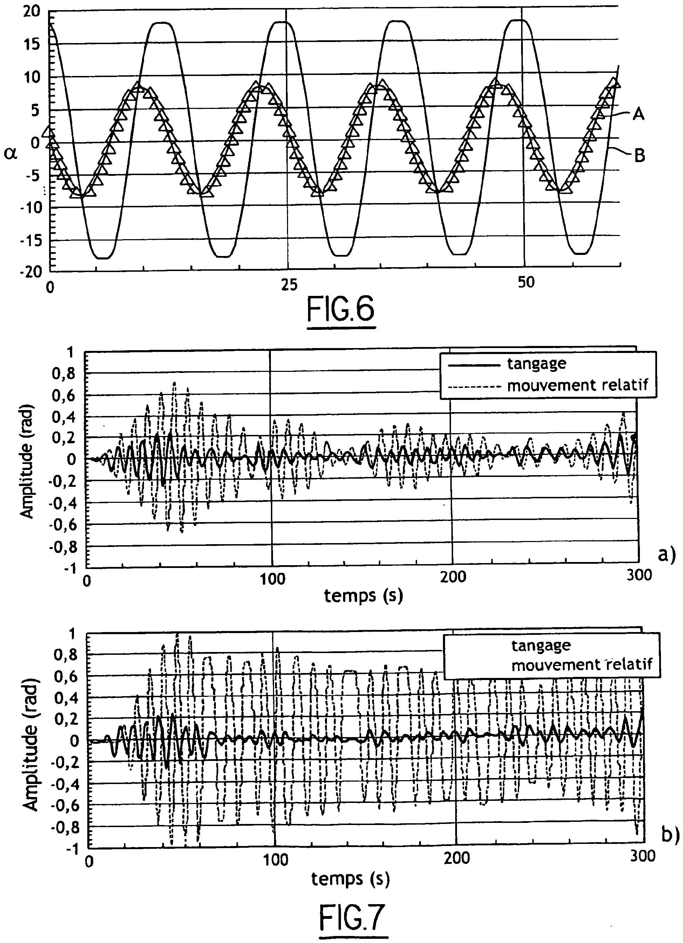

Sur le diagramme de la figure 6, la courbe A représente l'amplitude $\alpha$ des oscillations de l'élément formant masse au cours du temps, lorsque l'élément formant masse est laissé libre, pour une fréquence donné des vagues en houle régulière.

La courbe B représente l'amplitude des oscillations angulaires de l'élément formant masse au cours du temps, lorsque les moyens de blocage sont activés par les moyens de commande.

Le blocage de l'élément pendant une durée prédéterminée a pour effet de modifier la dynamique globale de l'appareil en l'adaptant continuellement à la forme de l'excitation générée par le mouvement des vagues. Le contrôle des moyens de blocage déplace de manière apparente la fréquence de résonance de l'appareil, ce qui a pour effet d'amplifier le mouvement de la masse mobile et ainsi l'énergie absorbée par le dispositif de récupération. On peut distinguer sur la courbe B, des parties plates correspondant aux phases de blocage de l'élément formant masse.

Le diagramme a) de la figure 7 représente l'amplitude des oscillations de l'élément flotteur (tangage) et l'amplitude des oscillations de l'élément formant masse par rapport à l'élément flotteur, au cours du temps, lorsque l'élément formant masse est laissé libre, dans des conditions de houle irrégulière.

Le diagramme b) de la figure 7 représente l'amplitude des oscillations de l'élément flotteur (tangage) et l'amplitude des oscillation de l'élément formant masse par rapport à l'élément flotteur, au cours du temps, lorsque les moyens de blocage sont activés par les moyens de commande, pour les mêmes conditions de houle que sur le diagramme b).

On constate que la commande par bloqué-lâché permet d'augmenter considérablement l'amplitude des oscillations de l'élément formant masse par rapport à l'élément flotteur.

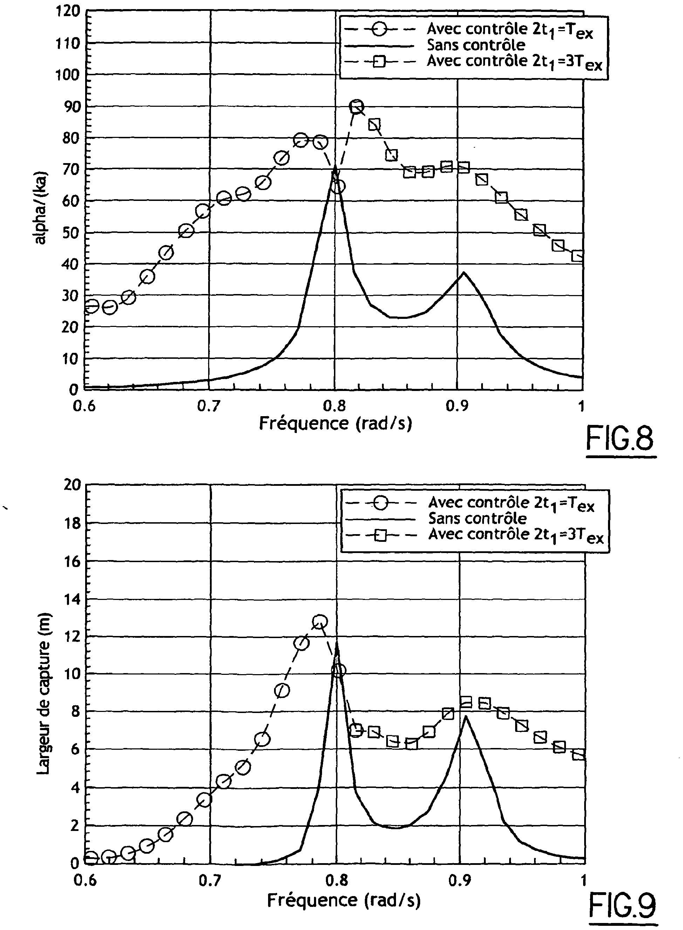

Le diagramme de la figure 8 montre l'amplitude du mouvement relatif de l'élément formant masse par rapport à l'élément flotteur, en houle régulière, en fonction de la fréquence de la houle, lorsque l'élément formant masse est laissé libre (courbe A) ou lorsqu'il est contrôlé par les moyens de blocage (courbe B). Ce coefficient est le rapport entre la réponse angulaire $\alpha$ et la pente maximale de la houle. Il découle de la linéarité de la réponse vis à vis de l'excitation.

On remarque que l'appareil présente deux fréquences propres $\omega_1$ et $\omega_2$ correspondant aux deux pics de la courbe A. La fréquence $\omega_1$ correspond à un mode d'oscillation dans lequel l'élément formant masse oscille à une fréquence $\omega_1$ égale à la fréquence de la houle ($k$ = 0). La fréquence $\omega_2$ correspond à un mode d'oscillation dans lequel l'élément formant masse oscille à une fréquence égale à un tiers de la fréquence de la houle ($k$ = 1), soit une période triple.

Le diagramme de la figure 9 montre la puissance générée par les oscillations de élément formant masse, en houle régulière, en fonction de la fréquence de la houle, lorsque l'élément formant masse est laissé libre (courbe A) ou lorsqu'il est contrôlé par les moyens de blocage (courbe B). Cette puissance s'exprime en mètre quand on la divise par la puissance de la houle incidente par mètre de front de vague. On parle alors de largeur de capture.

On constate que lorsque la fréquence des vagues est exactement égale à la fréquence propre de la masse ($\omega = \omega_1$), la commande des moyens de blocage n'est pas nécessaire car la réponse de l'appareil est naturellement optimale pour cette fréquence. En revanche, l'activation des moyens de blocage est particulièrement avantageuse lorsque la fréquence des vagues est différente de la fréquence propre de l'appareil. La commande par bloqué-lâché permet d'élargir considérablement la bande passante de l'appareil. Cette caractéristique a un effet bénéfique pour une excitation régulière sinusoïdale, mais également en mer réelle qui est considérée comme une superposition de vagues régulières.

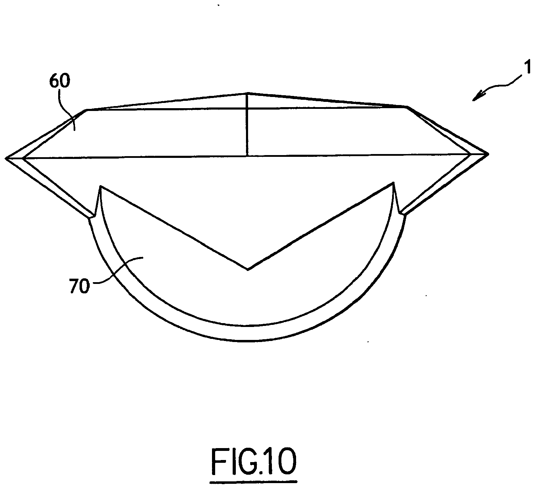

Les figures 10 à 12 représentent de manière schématique la forme de l'élément flotteur 1 destiné à être utilisé dans le mode de réalisation des figures 3, 4, 5A et 5B.

Comme on peut le voir sur ces figures, l'élément flotteur 1 comprend une partie supérieure 60 formant une coque surmontant une partie inférieure 70 formant une quille, les parties supérieure et inférieure 60, 70. La partie supérieure 60 a pour fonction de maintenir l'appareil à la surface de l'eau et la partie inférieure 70 a pour fonctions de contenir l'élément formant masse et de stabiliser l'appareil.

La partie inférieure 70 contenant l'élément formant masse présente une forme générale cylindrique plane présentant deux faces circulaires planes.

L'élément flotteur 1 est profilé de manière à s'orienter naturellement dans une direction de propagation des vagues. En particulier, la partie supérieure 60 présente une forme générale allongée selon un axe X longitudinal, l'axe X longitudinal s'étendant parallèlement aux faces planes de la partie inférieure 70. En outre, l'élément flotteur est symétrique par rapport au plan contenant l'axe X longitudinal et l'axe Z vertical de l'appareil.

La partie supérieure 60 présente une forme évasée qui s'élargit vers le haut en dessous de la flottaison et une forme profilée sans superstructure au dessus de la flottaison pour minimiser l'action destructrice des vagues déferlantes dans les états de mer extrêmes.

Plus précisément, la partie supérieure 60 présente une forme générale de pyramide à base rhombique. La partie supérieure 1 est disposée de sorte que le sommet de la pyramide soit dirigé vers le bas lorsque l'élément flotteur est immergé. La grande diagonale de la base de la pyramide s'étend selon l'axe longitudinal X et la petite diagonale de la base de la pyramide s'étend selon l'axe transversal Y.

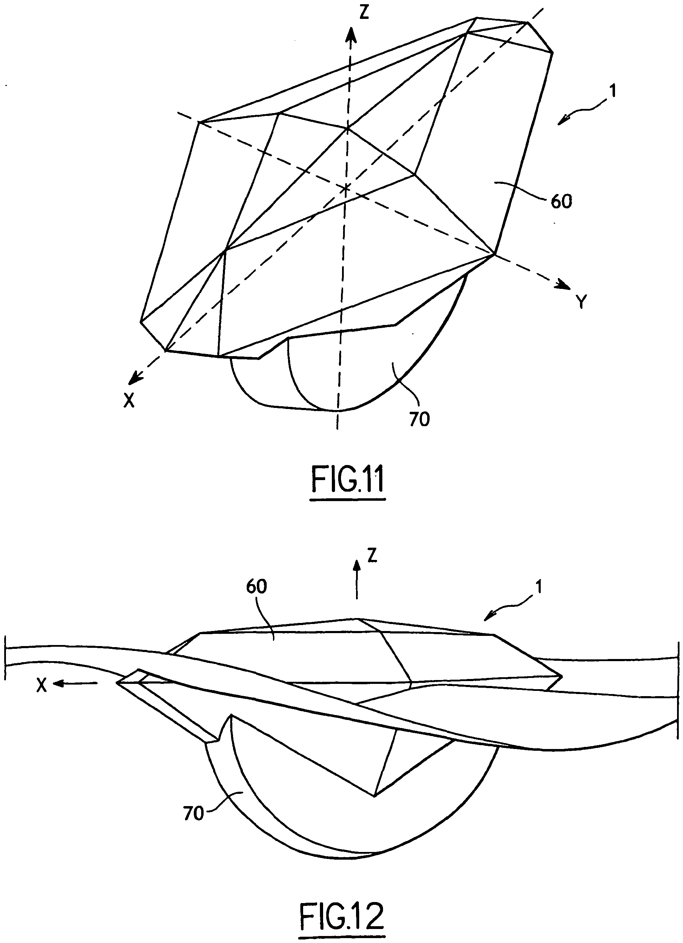

Comme illustré sur la figure 12, lorsque l'appareil est immergé, il se positionne naturellement dans l'eau avec la partie supérieure 60 au-dessus de la partie inférieure 70. En outre, lorsqu'il est amarré sur une seule ligne, l'appareil s'oriente naturellement de manière à ce que son axe longitudinal X corresponde sensiblement à la direction principale de propagation des vagues. Cette caractéristique permet que l'axe de rotation de l'élément formant masse (qui est parallèle à la direction transversale Y) soit orienté perpendiculairement à la direction de propagation des vagues afin d'obtenir une sollicitation maximale de l'élément formant masse.

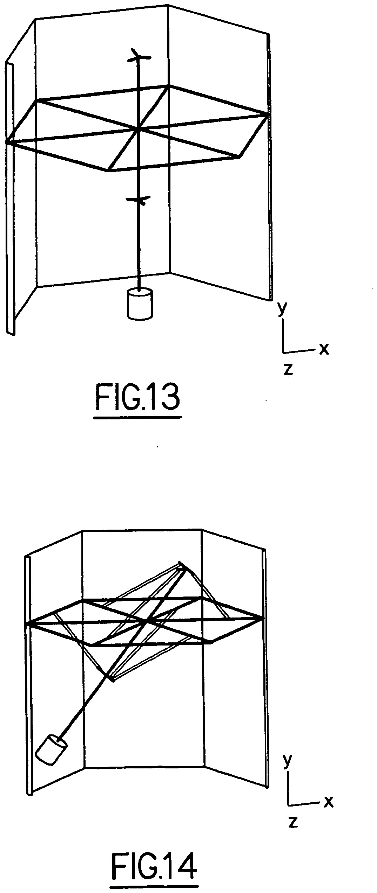

La figure 13 représente de manière schématique le mécanisme interne d'un appareil pour convertir l'énergie des vagues conforme à un quatrième mode de réalisation possible de l'invention.

Dans ce quatrième mode de réalisation, l'élément formant masse est lié à l'élément flotteur par une liaison rotule. L'élément formant masse est donc susceptible de se déplacer selon deux degrés de liberté en rotation par rapport à l'élément flotteur.

La figure 14 représente de manière schématique le dispositif de récupération d'énergie dans l'appareil de la figure 13. Le dispositif de récupération d'énergie comprend six vérins disposés de part et d'autre de la liaison rotule et orientés à 60 degrés les uns par rapport aux autres. Chaque vérin s'étend entre la tige supportant l'élément formant masse et l'élément flotteur.

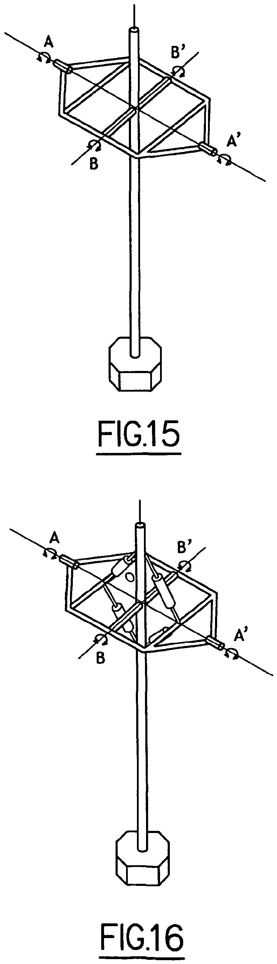

La figure 15 représente de manière schématique le mécanisme interne d'un appareil pour convertir l'énergie des vagues conforme à un cinquième mode de réalisation possible de l'invention.

Dans ce cinquième mode de réalisation, l'élément formant masse est lié à l'élément flotteur par une liaison de type cardan. La liaison de type cardan inclut une pièce de cardan montée à rotation selon un axe AA' par rapport à l'élément flotteur. La tige supportant l'élément formant masse est montée à rotation selon l'axe BB' par rapport à la pièce de cardan, l'axe BB' étant perpendiculaire à l'axe AA'. L'élément formant masse est donc susceptible de se déplacer selon deux degrés de liberté en rotation par rapport à l'élément flotteur, autour des axes AA' et BB'.

La figure 16 représente de manière schématique un premier dispositif de récupération d'énergie dans l'appareil de la figure 15. Ce premier dispositif de récupération est destiné à absorber l'énergie liée à la rotation de l'élément formant masse autour de l'axe BB', cette rotation étant entraînée par le mouvement de roulis de l'appareil. Il comprend des vérins s'étendant entre la tige supportant l'élément formant masse et la pièce de cardan.

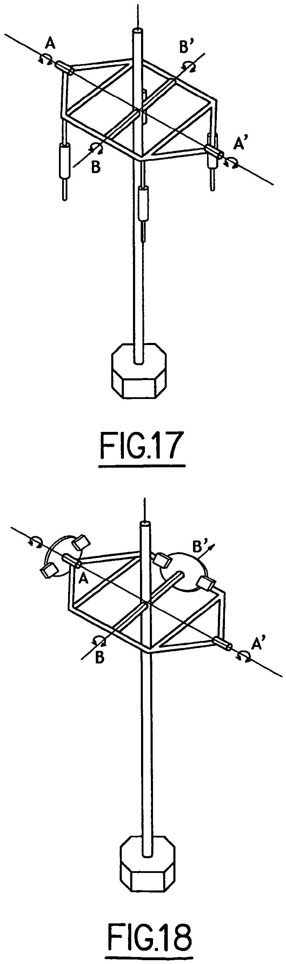

La figure 17 représente de manière schématique un deuxième dispositif de récupération d'énergie dans l'appareil de la figure 15. Ce deuxième dispositif de récupération d'énergie est destiné à absorber l'énergie liée à la rotation de l'élément formant masse autour de l'axe AA', cette rotation étant entraînée par le mouvement de tangage de l'appareil. Il comprend des vérins s'étendant entre la pièce de cardan et l'élément flotteur.

La figure 18 représente de manière schématique des moyens de blocage dans l'appareil de la figure 15. Les moyens de blocage comprennent des freins à disque disposés d'une part sur l'axe de rotation BB' et permettant de bloquer le mouvement de rotation entre l'élément formant masse et la pièce de cardan et d'autre part sur l'axe de rotation AA' et permettant de bloquer le mouvement de rotation entre la pièce de cardan et l'élément flotteur.

Les moyens de blocage disposés respectivement sur l'axe BB' et sur l'axe AA' peuvent être actionnés de manière individuelle par les moyens de commande en fonction des sollicitations des vagues selon ces deux axes.

## Revendications

1. Appareil pour convertir l'énergie des vagues en énergie électrique, comprenant un élément flotteur (1) fermé et un élément formant masse (2), l'élément formant masse (2) étant disposé à l'intérieur de l'élément flotteur (1) et étant monté mobile par rapport à l'élément flotteur (1), l'élément formant masse (2) étant apte à être mis en mouvement relatif par rapport à l'élément flotteur (1) sous l'action des vagues sur l'élément flotteur (1), **caractérisé en ce qu'**il comprend également des moyens de blocage (13, 50-59) aptes à bloquer le mouvement de l'élément formant masse (2) et des moyens de commande aptes à commander les moyens de blocage (13, 50-59) pour sélectivement bloquer ou libérer l'élément formant masse (2) de manière à amplifier le mouvement de l'élément formant masse (2) par adaptation continuelle de la dynamique de l'appareil aux vagues successives.

2. Appareil selon la revendication 1, dans lequel les moyens de commande sont aptes à commander les moyens de blocage (13, 50-59) pour qu'ils bloquent l'élément formant masse (2) lorsque celui-ci atteint une vitesse relative sensiblement nulle par rapport à l'élément flotteur (1).

3. Appareil selon l'une des revendications qui précèdent, dans lequel les moyens de commande sont aptes à commander les moyens de blocage (13, 50-59) pour qu'ils bloquent l'élément formant masse (2) pendant une durée de blocage calculée en fonction du mouvement de l'élément flotteur (1).

4. Appareil selon l'une des revendications qui précèdent, dans lequel l'élément formant masse (2) est libre de tourner autour d'un axe de rotation, le mouvement de l'élément formant masse (2) ne se trouvant pas limité par une fin de course.

5. Appareil selon l'une des revendications qui précèdent, dans lequel l'élément formant masse (2) présente une forme de révolution ayant un axe de révolution (4) et l'élément formant masse (2) peut tourner sur lui-même par rapport à l'élément flotteur (1) autour de l'axe de révolution.

6. Appareil selon la revendication 5, dans lequel l'élément formant masse (2) présente une forme générale cylindrique et peut tourner sur lui-même par rapport à l'élément flotteur (1) autour de l'axe du cylindre.

7. Appareil selon l'une des revendications 4 à 6, dans lequel l'élément formant masse présente un centre de gravité excentré par rapport à l'axe de révolution.

8. Appareil selon l'une des revendications 4 à 7, comprenant un dispositif de récupération d'énergie incluant au moins un galet rotatif en contact avec l'élément formant masse (2).

9. Appareil selon la revendication 8, dans lequel le dispositif de récupération d'énergie comprend un générateur relié au galet rotatif.

10. Appareil selon l'une des revendications 4 à 7, comprenant un dispositif de récupération d'énergie incluant une pluralité d'enroulements (81) et une pluralité d'aimants (82) disposés sur l'élément formant masse (2) et sur l'élément flotteur (1) de sorte que lorsque l'élément formant masse (2) est entraîné en rotation par rapport à l'élément flotteur (1), du courant électrique est généré dans les enroulements (81).

11. Appareil selon l'une des revendications qui précèdent, dans lequel l'élément flotteur comprend une partie supérieure (60) surmontant une partie inférieure (70), la partie inférieure (70) contenant l'élément formant masse.

**12.** Appareil selon la revendication 11, dans lequel la partie inférieure (70) présente une forme générale cylindrique plane.

**13.** Appareil selon l'une des revendication 11 ou 12, dans lequel la partie supérieure (60) présente une forme évasée qui s'élargit vers le haut.

**14.** Appareil selon la revendication 13, dans lequel la partie supérieure (60) présente une forme évasée qui s'élargit vers le haut en dessous de la flottaison et une forme profilée sans superstructure au dessus de la flottaison pour minimiser l'action destructrice des vagues déferlantes dans les états de mer extrêmes.

**15.** Appareil selon l'une des revendications qui précèdent, dans lequel l'élément flotteur (1) est profilé de sorte que lorsque l'appareil est immergé dans l'eau et amarré sur une seule ligne, il s'oriente naturellement par rapport à la direction principale de propagation des vagues afin d'obtenir une sollicitation maximale de l'élément formant masse (2).

**16.** Appareil selon la revendication 15, comprenant un élément formant masse (2) monté rotatif selon un axe de rotation (A) par rapport à l'élément flotteur (1), l'appareil s'orientant naturellement de manière à ce que l'axe de rotation (A) soit sensiblement perpendiculaire à la direction principale de propagation des vagues.

**17.** Appareil selon l'une des revendications qui précèdent, comprenant plusieurs éléments formant masse, montés mobiles par rapport à l'élément flotteur, chaque élément formant masse étant apte à être mis en mouvement par rapport à l'élément flotteur sous l'action des vagues sur l'élément flotteur et des moyens de blocage associés à chaque élément formant masse, les moyens de commande étant aptes à commander les moyens de blocage pour sélectivement bloquer ou libérer chacun des éléments formant masse.

**18.** Procédé pour convertir l'énergie des vagues en énergie électrique à partir d'un appareil comprenant un élément flotteur (1) fermé et un élément formant masse (2), l'élément formant masse (2) étant disposé à l'intérieur de l'élément flotteur (1) et étant monté mobile par rapport à l'élément flotteur (1), l'élément formant masse (2) étant apte à être mis en mouvement par rapport à l'élément flotteur (1) sous l'action des vagues sur l'élément flotteur (1), **caractérisé en ce qu'**il comprend les étapes consistant à commander des moyens de blocage (13, 50-59) aptes à bloquer le mouvement de l'élément formant masse (2) par des moyens de commande pour sélectivement bloquer ou libérer l'élément formant masse (2) de manière à amplifier le mouvement de l'élément formant masse (2) par adaptation continuelle de la dynamique de l'appareil aux vagues successives.

**19.** Procédé selon la revendication 18, comprenant les étapes selon lesquelles :

- des moyens de mesure transmettent de manière régulière à des moyens de traitement des données incluant des valeurs de paramètres relatifs aux mouvements de l'élément flotteur et de l'élément formant masse,
- les moyens de traitement déterminent des valeurs de la fréquence dominante d'excitation des vagues à un instant ultérieur, en fonction des valeurs de paramètres mesurées,
- les moyens de commande commandent les moyens de blocage pour qu'ils bloquent l'élément formant masse au moment ou l'élément formant masse atteint une vitesse relative nulle par rapport à l'élément flotteur,
- les moyens de traitement déterminent un délai optimal ($\hat{\theta}$) de blocage de l'élément formant masse, en fonction des valeurs de la fréquence dominante d'excitation des vagues,
- les moyens de commande commandent les moyens de blocage pour débloquer l'élément formant masse lorsque le compteur de temps a atteint le délai optimal $\hat{\theta}$.

**20.** Procédé selon la revendication 19, dans lequel, pour déterminer le délai optimal ($\hat{\theta}$) de blocage de l'élément formant masse, les moyens de traitement interrogent une table pré-établie contenant des valeurs de délai de blocage ($\hat{\theta}$) en fonction de la valeur de la fréquence d'excitation des vagues à un instant ultérieur.

**21.** Procédé selon la revendication 20, dans lequel les valeurs de délai de blocage ($\hat{\theta}$) ont été déterminées pour une houle régulière et pour l'appareil.

**Claims**

1. An appliance for the conversion of wave energy into electrical energy, comprising a closed float element (1) and a mass-forming element (2), with the mass-forming element (2) being placed inside the float element (1) and mounted to be mobile relatively to the float element (1), with the mass-forming element (2) being capable of being driven into relative movement relatively to the float element (1) under the action of the waves on the float element (1), **characterized in that** it also comprises locking means (13, 50-59) capable of locking the movement of the mass-forming element (2), and control means capable of controlling the locking means (13, 50-59) so as to selectively lock or release the mass-forming element (2) in order to amplify the movement of the mass-forming element (2) by continuously adapting the dynamics of the appliance to the successive waves.

2. The appliance according to claim 1, wherein the control means are capable of controlling the locking means (13, 50-59) so that they lock the mass-forming element (2) when the latter reaches a relative speed which is substantially zero relative to the float element (1).

3. The appliance according to one of the preceding claims, wherein the control means are capable of controlling the locking means (13, 50-59) so that they lock the mass-forming element (2) for a locking time which is calculated as a function of the movement of the float element (1).

4. The appliance according to one of the preceding claims, wherein the mass-forming element (2) is free to rotate about a rotation axis, with the movement of the mass-forming element (2) not being limited by a limiting end-of-travel.

5. The appliance according to one of the preceding claims, wherein the mass-forming element (2) has an axisymmetrical shape with an axis of revolution (4), and the mass-forming element (2) is able to rotate upon itself relatively to the float element (1) about the axis of revolution.

6. The appliance according to claim 5, wherein the mass-forming element (2) has a generally cylindrical shape and is able to rotate upon itself relatively to the float element (1) about the axis of the cylinder.

7. The appliance according to one of claims 4 to 6, wherein the mass-forming element has an excentered centre of gravity relatively to the axis of revolution.

8. The appliance according to one of claims 4 to 7, comprising a power recovery device that has at least one rotating wheel in contact with the mass-forming element (2).

9. The appliance according to claim 8, wherein the power recovery device comprises a generator connected to the rotating wheel.

10. The appliance according to one of claims 4 to 7, comprising a power recovery device that includes a plurality of windings (81) and a plurality of magnets (82) positioned on the mass-forming element (2) and on the float element (1) in such a way that when the mass-forming element (2) is driven in rotation relatively to the float element (1), an electric current is generated in the windings (81).

11. The appliance according to one of the preceding claims, wherein the float element comprises a top portion (60) surmounting a bottom portion (70), with the bottom portion (70) containing the mass-forming element.

12. The appliance according to claim 11, wherein the bottom portion (70) has a generally flat cylindrical shape.

13. The appliance according to either of claim 11 or 12, wherein the top portion (60) is of flared shape, which broadens toward the top.

14. The appliance according to claim 13, wherein the top portion (60) is of flared shape, which broadens toward the top below the waterline, and a profiled shape without any superstructure above the waterline so as to minimize the damaging action of the breaking waves in extreme sea conditions.

15. The appliance according to one of the preceding claims, wherein the float element (1) is profiled in such a way that when the appliance is immersed in water and moored by a single line, it is naturally orientated relatively to the main propagation direction of the waves so as to obtain maximum driving of the mass-forming element (2).

16. The appliance according to claim 15, comprising a mass-forming element (2) mounted so as to rotate upon a rotation axis (A) relatively to the float element (1), with the appliance being orientated naturally so that the rotation axis (A) is substantially perpendicular to the main propagation direction of the waves.

17. The appliance according to one of the preceding claims, comprising several mass-forming elements, mounted to be mobile relatively to the float element, with each mass-forming element being capable of being driven into movement relatively to the float element under the action of the waves on the float element, and locking means associated with each mass-forming element, with the control means being capable of controlling the locking means so as to selectively lock or release each of the mass-forming elements.

18. A method for converting wave energy into electrical energy from an appliance that comprises a closed float element (1) and a mass-forming element (2), with the mass-forming element (2) being placed inside the float element (1) and mounted to be mobile relatively to the float element (1), with the mass-forming element (2) being capable of being driven into movement relatively to the float element (1) under the action of the waves on the float element (1), **characterized in that** it comprises steps which consist of controlling locking means (13, 50-59) capable of locking the movement of the mass-forming element (2) by control means so as to selectively lock or release the mass-forming element (2) in order to amplify the movement of the mass-forming element (2) by continuously adapting the dynamics of the appliance to the successive waves.

19. The method according to claim 18, comprising steps wherein:

 - measuring means regularly transmit to processing means, data which include parameter values relating to the movements of the float element and of the mass-forming element,
 - the processing means determine the values of the dominant driving frequency of the waves at a subsequent time, as a function of the measured parameter values,
 - the control means control the locking means so that they lock the mass-forming element at the instant when the mass-forming element reaches zero relative speed relatively to the float element,
 - the processing means determine an optimum delay time ($\hat{\theta}$) for locking the mass-forming element, as a function of the values of the dominant drive frequency of the waves,
 - the control means control the locking means for releasing the mass-forming element when the time counter has reached the optimum delay time ($\hat{\theta}$).

20. The method according to claim 19, wherein, in order to determine the optimum delay time ($\hat{\theta}$) for locking the mass-forming element, the processing means look up a pre-established table containing locking delay time values ($\hat{\theta}$) as a function of the value of the driving frequency of the waves at a subsequent time.

21. The method according to claim 20, wherein the locking delay time values ($\hat{\theta}$) have been determined for a regular swell and for the relevant appliance.

**Patentansprüche**

1. Vorrichtung zur Umwandlung von Energie aus Wellen in elektrische Energie, umfassend ein geschlossenes schwimmendes Element (1) und ein Masse bildendes Element (2), wobei das Masse bildende Element (2) im Inneren des schwimmenden Elements (1) angeordnet ist und relativ zu dem schwimmenden Element (1) beweglich gelagert ist, wobei das Masse bildende Element (2) dafür geeignet ist, unter der Einwirkung der Wellen auf das schwimmende Element (1) relativ zu dem schwimmenden Element in eine Relativbewegung versetzt zu werden, **dadurch gekennzeichnet, dass** sie ferner Sperrmittel (13, 50-59) umfasst, die dafür geeignet sind, die Bewegung des Masse bildenden Elements (2) zu sperren, und Betätigungsmittel umfasst, die dafür geeignet sind, die Sperrmittel (13, 50-59) zu betätigen, um das Masse bildende Element (2) wahlweise zu sperren oder freizugeben, derart, dass die Bewegung des Masse bildenden Elements (2) durch kontinuierliche Anpassung der Dynamik der Vorrichtung an die aufeinander folgenden Wellen verstärkt wird.

2. Vorrichtung nach Anspruch 1, wobei die Betätigungsmittel dafür geeignet sind, die Sperrmittel (13, 50-59) zu betätigen, damit sie das Masse bildende Element (2) sperren, wenn dieses eine Relativgeschwindigkeit erreicht, die relativ zu dem schwimmenden Element (1) im Wesentlichen Null beträgt.

3. Vorrichtung nach einem der vorhergehenden Ansprüche, wobei die Betätigungsmittel dafür geeignet sind, die Sperrmittel (13, 50-59) zu betätigen, damit sie das Masse bildende Element (2) während eines Sperrzeitraums sperren, der in Abhängigkeit von der Bewegung des schwimmenden Elements (1) berechnet wird.

4. Vorrichtung nach einem der vorhergehenden Ansprüche, wobei sich das Masse bildende Element (2) frei um eine Rotationsachse drehen kann, wobei die Bewegung des Masse bildenden Elements (2) nicht durch eine Endlage begrenzt ist.

5. Vorrichtung nach einem der vorhergehenden Ansprüche, wobei das Masse bildende Element (2) eine Rotationsform mit einer Rotationsachse (4) aufweist und das Masse bildende Element (2) sich relativ zu dem schwimmenden Element (1) um die Rotationsachse um sich selbst drehen kann.

6. Vorrichtung nach Anspruch 5, wobei das Masse bildende Element (2) eine im Allgemeinen zylindrische Form aufweist und sich relativ zu dem schwimmenden Element (1) um die Achse des Zylinders um sich selbst drehen kann.

7. Vorrichtung nach einem der Ansprüche 4 bis 6, wobei das Masse bildende Element einen relativ zu der Rotationsachse exzentrischen Schwerpunkt aufweist.

8. Vorrichtung nach einem der Ansprüche 4 bis 7, umfassend eine Vorrichtung zur Energierückgewinnung, die zumindest eine drehbare Rolle umfasst, die in Kontakt mit dem Masse bildenden Element (2) ist.

9. Vorrichtung nach Anspruch 8, wobei die Vorrichtung zur Energierückgewinnung einen mit der drehbaren Rolle verbundenen Generator umfasst.

10. Vorrichtung nach einem der Ansprüche 4 bis 7, umfassend eine Vorrichtung zur Energierückgewinnung, die eine Vielzahl von Wicklungen (81) und eine Vielzahl von Magneten (82) umfasst, die an dem Masse bildenden Element (2) und an dem schwimmenden Element (1) derart angeordnet sind, dass, wenn das Masse bildende Element (2) relativ zu dem schwimmenden Element (1) zur Drehung angetrieben ist, in den Wicklungen (81) elektrischer Strom erzeugt wird.

11. Vorrichtung nach einem der vorhergehenden Ansprüche, wobei das schwimmende Element einen oberen Teil (60) umfasst, der einen unteren Teil (70) überragt, wobei der untere Teil (70) das Masse bildende Element umfasst.

12. Vorrichtung nach Anspruch 11, wobei der untere Teil (70) eine im Allgemeinen ebene zylindrische Form aufweist.

13. Vorrichtung nach einem der Ansprüche 11 oder 12, wobei der obere Teil (60) eine aufgeweitete Form aufweist, die sich nach oben aufweitet.

14. Vorrichtung nach Anspruch 13, wobei der obere Teil (60) eine aufgeweitete Form, die sich nach oben aufweitet, unterhalb des Wasserstands und eine profilierte Form ohne Überbau oberhalb des Wasserstands aufweist, um die zerstörerische Wirkung der sich bei extremen Meeresbedingungen brechenden Wellen zu minimieren.

15. Vorrichtung nach einem der vorhergehenden Ansprüche, wobei das schwimmende Element (1) derart profiliert ist, dass, wenn die Vorrichtung in das Wasser getaucht ist und an einer einzigen Leine vertäut ist, sie sich auf natürliche Weise relativ zu der Hauptausbreitungsrichtung der Wellen ausrichtet, um eine maximale Beaufschlagung des Masse bildenden Elements (2) zu erhalten.

16. Vorrichtung nach Anspruch 15, umfassend ein Masse bildendes Element (2), das entlang einer Rotationsachse (A) relativ zu dem schwimmenden Element (1) drehbar gelagert ist, wobei sich die Vorrichtung auf natürliche Weise derart ausrichtet, dass die Rotationsachse (A) im Wesentlichen senkrecht zu der Hauptausbreitungsrichtung der Wellen ist.

17. Vorrichtung nach einem der vorhergehenden Ansprüche, umfassend mehrere Masse bildende Elemente, die relativ zu dem schwimmenden Element beweglich gelagert sind, wobei jedes Masse bildende Element dafür geeignet ist, unter der Einwirkung der Wellen auf das schwimmende Element und der Sperrmittel, die jedem Masse bildenden Element zugeordnet sind, relativ zu dem schwimmenden Element in Bewegung versetzt zu werden, wobei die Betätigungsmittel dafür geeignet sind, die Sperrmittel zu betätigen, um jedes der Masse bildenden Elemente wahlweise zu sperren oder freizugeben.

**18.** Verfahren zur Umwandlung der Energie von Wellen in elektrische Energie, ausgehend von einer Vorrichtung umfassend ein schwimmendes Element (1) und ein Masse bildendes Element (2), wobei das Masse bildende Element (2) im Inneren des schwimmenden Elements (1) angeordnet ist und relativ zu dem schwimmenden Element (1) beweglich gelagert ist, wobei das Masse bildende Element (2) dafür geeignet ist, unter der Einwirkung der Wellen auf das schwimmende Element (1) relativ zu dem schwimmenden Element in Bewegung versetzt zu werden, **dadurch gekennzeichnet, dass** es die Schritte umfasst, die darin bestehen, Sperrmittel (13, 50-59), die dafür geeignet sind, die Bewegung des Masse bildenden Elements (2) zu sperren, durch Betätigungsmittel zu betätigen, um das Masse bildende Element (2) wahlweise zu sperren oder freizugeben, derart, dass die Bewegung des Masse bildenden Elements (2) zu sperren, durch kontinuierliche Anpassung der Dynamik der Vorrichtung an die aufeinander folgenden Wellen verstärkt wird.

**19.** Verfahren nach Anspruch 18, umfassend die Schritte, wonach:

- Messmittel regelmäßig an Verarbeitungsmittel Daten übertragen, die Parameterwerte in Bezug auf die Bewegungen des schwimmenden Elements und des Masse bildenden Elements enthalten,
- die Verarbeitungsmittel Werte für die vorherrschende Erregerfrequenz der Wellen zu einem späteren Zeitpunkt in Abhängigkeit der gemessenen Parameterwerte bestimmen,
- die Betätigungsmittel die Sperrmittel betätigen, damit sie das Masse bildende Element (2) zu dem Zeitpunkt sperren, zu dem das Masse bildende Element eine relative Geschwindigkeit erreicht, die relativ zu dem schwimmenden Element im Wesentlichen Null beträgt,
- die Bearbeitungsmittel in Abhängigkeit von den Werten für die vorherrschende Erregerfrequenz der Wellen eine optimale Verzögerung ($\theta$) für das Sperren des Masse bildenden Elements bestimmen,
- die Betätigungsmittel die Sperrmittel betätigen, damit sie das Masse bildende Element entsperren, wenn der Zeitzähler die optimale Verzögerung ($\theta$) erreicht hat.

**20.** Verfahren nach Anspruch 19, wobei zur Bestimmung der optimalen Verzögerung ($\theta$) für das Sperren des Masse bildenden Elements die Verarbeitungsmittel eine vorab erstellte Tabelle abfragen, die Werte für die Sperrverzögerung (8) in Abhängigkeit vom Wert der Erregerfrequenz der Wellen zu einem späteren Zeitpunkt enthält.

**21.** Verfahren nach Anspruch 20, wobei die Werte für die Sperrverzögerung ($\theta$) für einen regelmäßigen Seegang und für die Vorrichtung bestimmt wurden.

FIG.1

FIG.2

FIG.3

FIG.4

21

FIG.5A

FIG.5B

EP 1 809 897 B1

FIG.6

FIG.7

FIG.8

FIG.9

FIG.10

FIG.11

FIG.12

FIG.13

FIG.14

FIG.15

FIG.16

FIG.17

FIG.18

FIG.19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 547765
- WO 0223039 A
- FR 8000785
- US 4599858 A
- GB 2094408 A


**Littérature non-brevet citée dans la description**

- **A. BABARIT ; G. DUCLOS ; A. H. CLEMENT.** Contrôle discret par latching d'un système houlomoteur à un degré de liberté. *acte des 9ièmes Journées de l'Hydrodynamique,* Mars 2003, 251-264
- **A. BABARIT ; G. DUCLOS ; A. H. CLEMENT.** Comparison of latching control stratégies for a heaving wave energy device in random sea. *proceedings of 5th European Wave Energy Conférence,* 2003
- **A. BABARIT ; G. DUCLOS ; A. H. CLEMENT.** Benefit of latching control for heaving wave energy device in random sea. *proceedings of 13th International Offshore and Polar Engineering Conference,* 2003, vol. 1, 341-348
- **A. H. CLEMENT.** Using differential properties of the Green function in seakeeping computational codes. *Proceedings of 7th International conference Numer. Ship Hydrod, Nantes,* 1999, 6.5-16.5-15
- **G. DUCLOS ; A. H. CLÉMENT ; G. CHATRY.** Absorption of outgoing waves in a numerical wave tank using a self-adaptive boundary condition. *Int. Journal of Offshore and Polar Engineering,* 2001, vol. 11 (3), ISSN 1053-5381, 168-175
- **G. CHATRY ; A. H. CLEMENT ; T. GOURAUD.** Self adaptative control of a piston wave-absorber. *proceedings of 8th International Offshore and Polar Engineering Conference,* 1998, vol. 1, 127-133